# EUROPÄISCHE PATENTSCHRIFT

(11) **EP 0 892 998 B1**
(45) Veröffentlichungstag und Bekanntmachung des Hinweises auf die Patenterteilung: **15.09.1999**
(21) Anmeldenummer: 97917293.9
(22) Anmeldetag: 05.04.1997
(51) Int. Cl.: H01R 11/28, H01R 13/44

(54) **ARBEITSGERÄT MIT EINEM ELEKTROMOTOR ALS ANTRIEB**
TOOL WITH AN ELECTRIC MOTOR AS THE DRIVE
OUTIL MUNI D'UN MOTEUR ELECTRIQUE POUR SYSTEME D'ENTRAINEMENT

(30) Priorität: 10.04.1996 DE 19614199
(43) Veröffentlichungstag der Anmeldung: 27.01.1999
(73) Patentinhaber: WOLF-Geräte GmbH Vertriebsgesellschaft KG, D-57518 Betzdorf/Sieg (DE)
(72) Erfinder: HELD, Peter, D-57584 Scheuerfeld (DE); PFAU, Ulrich, D-57567 Daaden (DE)
(74) Vertreter: Koch, Günther, Dipl.-Ing.
(86) Internationale Anmeldenummer: EP9701707
(87) Internationale Veröffentlichungsnummer: WO9738468

(56) Entgegenhaltungen:
- WO-A-94/01993
- DE-A- 4 406 879
- US-A- 3 696 593

## Beschreibung

Die Erfindung bezieht sich auf ein Arbeitsgerät, insbesondere auf ein Gartengerät, z.B. einen Rasenmäher, mit einem Elektromotor als Antrieb und einer auswechselbaren, aufladbaren Batterie, deran elektrische anschlüsse über eine Steckvorrichtung mit den Motoranschlüssen verbindbar sind.

Bei batteriebetriebenen Kleinelektrowerkzeugen, beispielsweise Handbohrmaschinen oder elektromotorisch betriebenen Handschraubern, ist es üblich, ein Akkumulatorpaket vorzusehen, das mit steckkontakten ausgerüstet ist, die in Gegenanschlüsse der Elektrohandwerksmaschine oder eines Ladegerätes einsteckbar sind. Hierbei bilden die Steckkontakte und die Gegenanschlüsse jeweils einen Teil einer Steckkupplung, wobei ein Teil der Anschlußmittel aus in Steckrichtung hervorstehenden Kontaktstiften besteht.

Ein derartiges Akkumulatorpaket für Elektrohandwerkszeugmaschinen ist aus der DE 94 21 382 bekannt. Dabei sind außer den die elektrische Verbindung zum Antriebsmotor bzw. zum Ladegerät herstellenden Steckkontakten noch Formschlußverbindungen vorgesehen, die eine Verpolung ausschließen. Bei dem bekannten Akkumulatorpaket wird beim Zusammenfügen der Kupplungsteile zwangsläufig die elektrische Verbindung hergestellt. Um eine unbeabsichtigte elektrische Überbrückung des vom Handwerkszeug getrennten Akkumulatorpakets zu verhindern, sind die elektrischen Steckkontakte des Akkumulatorpakets an mindestens einer Seite mit einer elektrischen Isolierung versehen, wodurch die Kurzschlußsicherheit verbessert werden soll.

Für größere Arbeitsgeräte, wie beispielsweise Gartengeräte, sind derartige Kupplungssteckverbindungen schon deshalb nicht ohne weiteres anwendbar, weil aus Sicherheitsgründen ein zusätzlicher Schalter als Kindersicherung vorgesehen werden muß, der den Stromfluß in unmittelbarer Nähe der Batterie unterbricht.

Es sind Rasenmäher mit auswechselbaren Batteriepaketen bekannt, bei denen an der Außenseite des Batteriepaketes Anschlüsse anordnet sind, die beim Einsetzen des Batteriepaketes in eine Batterieführung des Gerätegehäuses zwangsläufig mit den im Gerät befindlichen Anschlüssen kontaktieren. Als Sicherheitsschalter ist am Rasenmäherchassis in Batterienähe ein allgemein als Schlüsselschalter ausgebildeter Schalter vorgesehen. Zum Aufladen der Batterie sind im Gerätegehäuse Anschlüsse zum Einstecken einer Verbindungsbuchse vorgesehen, über die ein Ladegerät Strom zur aufladung der Batterie liefert. Die Batterie kann auch nach Entnahme aus dem Arbeitsgerät über das Ladegerät aufgeladen werden, das an die Batterieanschlüsse anschaltbar ist.

Bei einem in der WO 94/01993 beschriebenen, als Rasenmäher ausgebildeten, Arbeitsgerät ist der Bügelstecker als Überlastsicherung ausgebildet und enthält entweder eine Schmelzsicherung oder einen Überlastschalter. Das bei dem bekannten Arbeitsgerät fest in das Chassis eingebaute Batteriepaket weist einen Ladestecker, einen Netztrafo und einen mit der Batterie verbundenen Gleichrichter auf. Der Ladestecker wird zum Aufladen der Batterie mit dem Netz verbunden. Die Buchsen des Netzsteckeranschlusses können auf die Ladesteckerstifte nur dann aufgeschoben werden, wenn ein darüberliegender Schieber seitlich verschoben ist, und dessen Verschiebung in die Öffnungs-stellung ist nur dann möglich, wenn der Bügel stecker gezogen und damit der Motor von den Batterieanschlüssen getrennt ist. Solange der Schieber verschoben ist und den Netzanschluß freigibt, kann der Sicherungsbügelstecker nicht gesteckt werden, so daß die Verbindung zwischen Motor und Batterie unterbrochen bleibt, solange der Netzstecker mit dem Gerät verbunden ist.

Der Erfindung liegt die Aufgabe zugrunde, ein Arbeitsgerät mit einer Sicherheitsteckkontakt-Verbindungsvorrichtung zu versehen, bei der die elektrische Kontaktverbindung zwischen den Anschlüssen eines auswechselbaren Batteriepaketes und Motoranschlüssen bzw. Ladegeräteanschlüssen nicht allein durch Einsetzen des Batteriepaketes in das Arbeitsgerät hergestellt werden kann, sondern weitere Steckfunktionen erforderlich sind.

Gelöst wird die gestellte Aufgabe durch die Gesamtheit der im Kennzeichnungsteil des Patentanspruchs 1 angegebenen Merkmale. Hierbei wird erst durch Aufstecken des Bügelsteckers eine elektrische Verbindung möglich, und diese elektrische Verbindung über den Bügelstecker kann nur dann geschlossen werden, wenn das Batteriepaket ordnungsgemäß in das Arbeitsgerät eingesetzt ist, so daß die Motoranschlüsse und die Batteriepaketanschlüsse parallel zueinander in gleicher Höhe aufnahmebereit für den Bügel stecker liegen. Dieser Bügelstecker bewirkt eine zuverlässige galvanische Trennung zwischen Batterie und Motor, und erst nach Abziehen des Bügelsteckers, d.h. nach der galvanischen Trennung, kann das Batteriepaket aus der entsprechenden Führung des Gerätegehäuses herausgehoben werden, so daß mit Sicherheit ein Einschalten des Motors beim Auswechseln des Batteriepaketes ausgeschlossen ist. Der übliche, beispielsweise als Schlüsselschalter ausgebildete Sicherheitsschalter, verhindert dieses ungewollte Einschalten demgegenüber nicht.

Gemäß einer weiteren Ausgestaltung der Erfindung kann der gleiche Bügelstecker als Ladestecker Verwendung finden, wobei dieser Ladebügelstecker an einem mehrpoligen Stecker des Batteriepaketes festgelegt wird und die Verbindung zum Ladegerät herstellt. Dies könnte dadurch geschehen, daß am Ladegerät bzw. der Zuführungsleitung ein weiterer mehrpoliger Stecker derart vorgesehen ist, daß der gleiche Bügelstecker den mehrpoligen Stecker des aus dem Arbeitsgerät entnommenen Batteriepaketes mit einem mehrpoligen Stecker verbindet, der am Ladegerät oder der Zuführung vorgesehen ist. Dies bedingt jedoch, daß die Batterie jeweils zur Aufladung aus dem Arbeitsgerät entnommen werden muß. Daher ist nach einer weiteren Ausgestaltung der Erfindung das Ladegerät bzw. die Anschlußleitung mit einem dem Verbindungsbügelstecker entsprechenden Stecker ausgestattet, der auf die mehrpoligen Stecker von Batteriepaket bzw. Ladegerät aufsteckbar ist und diese elektrisch miteinander verbindet, während die Verbindung nach dem Antriebsmotor des Gerätes unterbrochen ist. Entsprechende Formschlußverbindungen verhindern auch hierbei eine fehlerhafte Polung.

Durch die Erfindung wird erreicht, daß die Bügelsteckeranordnung für die drei Funktionen einsetzbar ist, nämlich zur Sicherheitsstromunterbrechung, zur Stromverbindung nach dem Antriebsmotor und zur Stromverbindung zwischen Batteriepaket und Ladegerät. Als Steckkontakte für die mehrpoligen Stecker und den Bügelstecker können herkömmliche Federkontakte und Kontaktbuchsen Verwendung finden, so daß die Steckverbindung preisgünstig herstellbar ist.

Nachstehend wird ein Ausführungsbeispiel der Erfindung anhand eines in der Zeichnung dargestellten Rasenmähers beschrieben. In der Zeichnung zeigen:

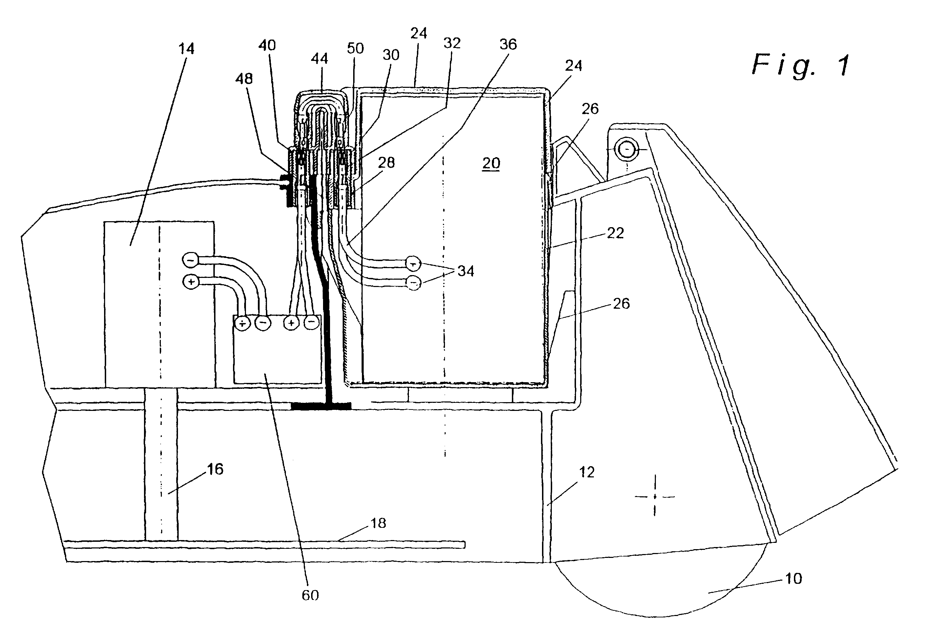

Fig. 1 ist eine schematische Teilseitenansicht eines Rasenmähers mit der Steckkontaktverbindung zwischen Batteriepaket und Antriebsmotor;
Fig. 2 im größeren Maßstab eine Schnittansicht der Steckvorrichtung;

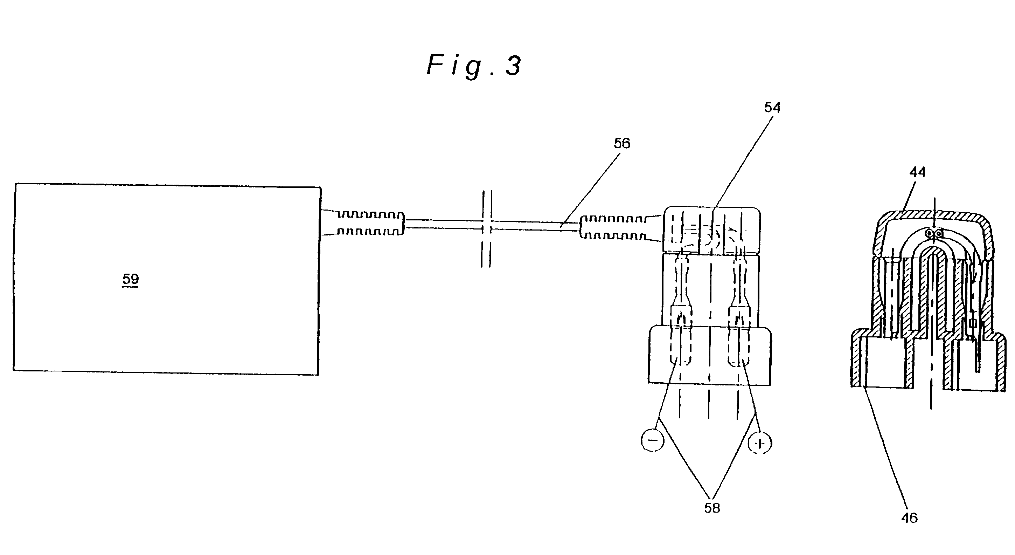

Fig. 3 eine schematische Ansicht eines Ladegerätes mit Ladebügelstecker.

Das von Rädern 10 getragene Chassis 12 eines Rasenmähers trägt einen Gleichstrom-Elektromotor 14, dessen senkrecht verlaufende Abtriebswelle 16 die in einer Horizontalebene umlaufenden Messer 18 trägt.

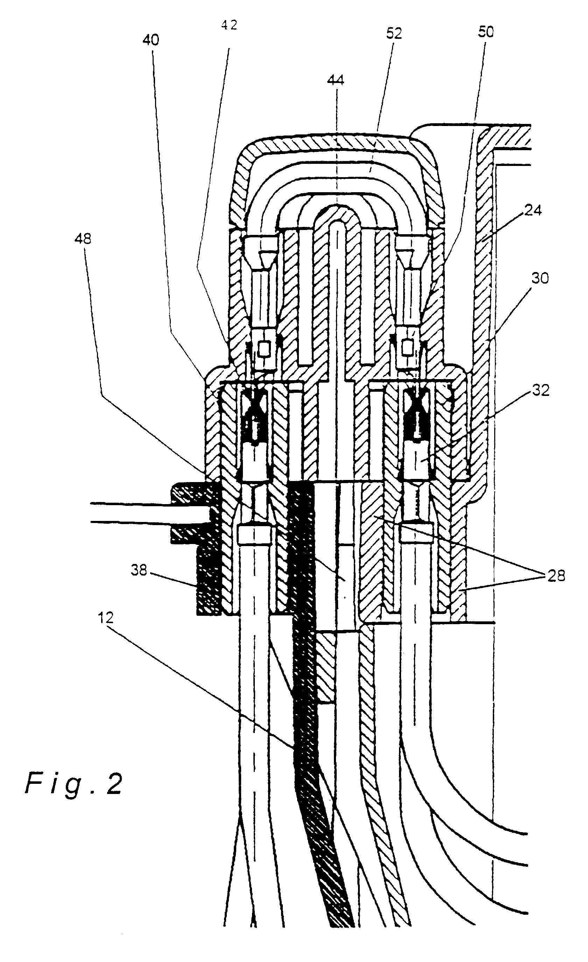

Eine aufladbare Batterie 20 ist in einem zweiteiligen, aus Unterteil 22 und Deckel 24 bestehenden Batteriegehäuse untergebracht. Dieses aus Batterie 20, Unterteil 22 und Deckel 24 bestehende Batteriepaket ist in Führungen 26 des Chassis eingesetzt, die eine vertikale Entnahme des Batteriepaketes und ein Einfügen des Batteriegehäuses in das Chassis ermöglichen, wobei Abschrägungen eine Führung in die Endstellung gewährleisten, in der das Batteriepaket formschlüssig nach allen Seiten hin abgestützt ist. Wie insbesondere aus Fig. 2 ersichtlich, weist der Deckel 24 an seinem unteren, dem Motor zugewandten Ende eine Halterung 28 für die Schutzhülse 30 eines Mehrpolsteckers auf, der zwei parallel zueinander angeordnete Federkontakte 32 besitzt, die mit den Batterieanschlüssen 34 über Kabel 36 verbunden sind. In einem im Chassis des Rasenmähers eingesetzten Isolierstück 38 ist ein weiterer Mehrpolstecker, bestehend aus Schutzhülse 40 und Federkontakten 42, fixiert. Wenn das Batteriepaket 20, 22, 24 in das Rasenmäherchassis eingesetzt ist, dann liegen die Federkontaktpaare 32 und 42 parallel zueinander und in gleicher Höhenlage.

Die Federkontakte 32 und 42 der beiden Paare sind durch einen Bügelstecker 44 verbindbar. Dieser Bügelstecker weist ein Steckergehäuse auf, das auf die Schutzhülsen 30 und 40 des Batteriepaketes bzw. des Gerätegehäuses aufsetzbar ist, wobei eine geeignete Formschlußverbindung 46 am Bügelsteckergehäuse bzw. den Mehrpolsteckern eine Verpolung ausschließt. Eine weitere Formschlußverbindung 48 in Gestalt einer T-Führung zwischen Batteriegehäusedeckel 24 und Gerätegehäuseteil 38 gewährleistet eine feste Verbindung von Batteriepaket und Gerätegehäuse. Auf diese Weise werden Relativbewegungen zwischen den beiden Einraststeckern 30 und 40 und damit zwischen den Kontaktstellen minimiert.

Mit den Federkontakten 32 bzw. 40 wirken Kontaktmesser 50 zusammen, die im Inneren des Bügelsteckers 44 parallel zueinander vorstehen und die durch Kabelbrücken 52 paarweise überbrückt sind.

Ein dem Überbrückungsbügelstecker 44 in seiner Form angepaßter Stecker 54 ist über ein Ladekabel 56 mit einem Ladegerät 59 verbunden. Der Ladestecker 54 ist mit Kontaktmessern 58 ausgestattet, die mit den Federkontakten 32 des Mehrpolsteckers 30 zusammenwirken. Durch die Formschlußverbindung 46 wird gewährleistet, daß der Ladestecker 54 nur in der richtigen Winkellage aufgesteckt werden kann, in der die Minuspole bzw. die Pluspole miteinander verbunden sind. Eine elektrische Verbindung nach dem Antriebsmotor ist dabei ausgeschlossen.

Zwischen den Anschlußklemmen des Motors 14 und dem Mehrpolstecker mit den Federkontakten 42 ist eine Schaltelektrik 60 untergebracht.

Die Erfindung wurde anhand eines Rasenmähers beschrieben, jedoch kann diese auch für andere Gartengeräte, wie z.B. Heckenscheren oder Vertikutiergeräte, aber auch bei anderen Arbeitsgeräten außerhalb des Gartensektors Anwendung finden. Gemäß dem dargestellten Ausführungsbeispiel überbrückt der Bügelstecker zwei in gleicher Höhenlage angebrachte Kontaktfederpaare. Diese könnten jedoch bei entsprechnder Ausbildung des Bügelsteckers auch in unterschiedlichen Höhenlagen angeordnet sein. Die vertikale Steckrichtung ist aus Gründen des Bedienungskomforts zu bevorzugen. Vorbehalten bleiben soll jedoch auch eine andere Steckrichtung.

### Bezugszeichenliste

- 10: Räder
- 12: Chassis
- 14: Elektromotor
- 16: Abtriebswelle
- 18: Messer
- 20: Batterie )
- 22: Unterteil ) Batteriepaket
- 24: Deckel )
- 26: Führungen
- 28: Halterung
- 30: Schutzhülse
- 32: Federkontakte
- 34: Batterieanschlüsse
- 36: Kabel
- 38: Isolierstück
- 40: Schutzhülse
- 42: Federkontakte
- 44: Bügelstecker
- 46: Formschlußführung
- 48: Formschlußverbindung
- 50: Kontaktmesser
- 52: Kabelbrücken
- 54: Ladestecker
- 56: Ladekabel
- 58: Kontaktmesser
- 59: Ladegerät
- 60: Schaltelektrik

## Patentansprüche

1. Arbeitsgerät mit einem Elektromotor (14) als Antrieb und einem Batteriepaket (20, 22, 24) mit einer aufladbaren Batterie (20), deren Anschlüsse (34) über eine Steckvorrichtung mit den Motoranschlüssen verbindbar sind, wobei die Steckvorrichtung zwei parallel zueinander angeordnete, mit den Batterieanschlüssen bzw. den Motoranschlüssen in Verbindung stehende mehrpolige Stecker und einen abziehbaren VerbindungsBügelstecker (44) für diese Stecker aufweist,
dadurch gekennzeichnet, daß der eine Stecker im Chassis (12) des Gerätes und der andere Stecker an dem Batteriepaket (20, 22, 24) festgelegt ist, das aus dem Chassis (12) entnehmbar und in dieses über eine Führung (26) einsetzbar ist.

2. Arbeitsgerät nach Anspruch 1,
dadurch gekennzeichnet, daß die Steckachse des Bügelsteckers (44) parallel zu der Führung (26) für das Batteriepaket (20, 22, 24) verläuft.

3. Arbeitsgerät nach Anspruch 2,
dadurch gekennzeichnet, daß die Stecker Federkontakte (32, 42) aufweisen, die von Schutzhülsen (30, 40) getragen werden, die im Deckel (24) des Batteriepaketes bzw. in einem im Gerätechassis eingesetzten Isolierstück (38) festgelegt sind.

4. Arbeitsgerät nach einem der Ansprüche 1 bis 3,
dadurch gekennzeichnet, daß die Führung (26) eine Formschlußverbindung (48) aufweist, die die gegenseitige Lage der Stecker im eingesetzten Zustand der Batterie festlegt.

5. Arbeitsgerät nach einem der Ansprüche 1 bis 4,
dadurch gekennzeichnet, daß der Bügelstecker (44) parallel zur Einsatzrichtung des Batteriepaketes (20, 22, 24) steckbar ist.

6. Arbeitsgerät nach einem der Ansprüche 1 bis 5,
gekennzeichnet durch einen dem Bügelstecker (44) entsprechenden Ladestecker (54), der über ein Ladekabel (56) mit einem Ladegerät (59) verbunden ist und Kontaktmesser (58) als Ladeanschlußkontakte aufweist.

7. Arbeitsgerät nach einem der Ansprüche 1 bis 6,
dadurch gekennzeichnet, daß Bügelstecker (44) und Ladestecker (54) eine Formschlußführung (46) aufweisen.

8. Arbeitsgerät nach einem der Ansprüche 1 bis 7,
dadurch gekennzeichnet, daß die Federkontakte (32, 42) vollständig von den Schutzhülsen (30, 40) umschlossen sind und mit Kontaktmessern (50, 58) des Bügelsteckers (44) bzw. des Ladesteckers (54) zusammenwirken.

9. Arbeitsgerät nach einem der Ansprüche 1 bis 8,
dadurch gekennzeichnet, daß es als Rasenmäher ausgebildet ist.

10. Arbeitsgerät nach einem der Ansprüche 1 bis 9,
dadurch gekennzeichnet, daß zwischen den Motoranschlüssen und den geräteseitigen Federkontakten (42) eine Schaltelektrik (60) angeordnet ist.

## Claims

1. Appliance with an electric motor (14) as the drive and with a battery unit (20, 22, 24) having a rechargeable battery (20), the terminals (34) of which are adapted to be connected to the motor terminals via a plug-in device, the plug-in device having two multi-pole plugs arranged parallel to one another and communicating with the battery terminals and motor terminals, respectively, and having a withdrawable bow-type connecting plug (44) for these plugs,
characterised in that the one plug is located in the chassis (12) of the appliance and the other plug on the battery unit (20, 22, 24), which is adapted to be removed from the chassis (12) and inserted thereinto via a guide (26).

2. Appliance according to claim 1,
characterised in that the plug-in axis of the bow-type plug (44) extends parallel to the guide (26) for the battery unit (20, 22, 24).

3. Appliance according to claim 2,
characterised in that the plugs have spring-mounted contacts (32, 42) which are supported by protective sleeves (30, 40) located in the cover (24) of the battery unit, or in an insulating element (38) inserted in the appliance chassis.

4. Appliance according to any of claims 1 to 3,
characterised in that the guide (26) has a positive connection (48) which locates the mutual position of the plugs once the battery has been inserted.

5. Appliance according to any of claims 1 to 4,
characterised in that the bow-type plug (44) is adapted to be plugged in parallel to the direction in which the battery unit (20, 22, 24) is inserted.

6. Appliance according to any of claims 1 to 5,
characterised by a charging plug (54) which matches the bow-type plug (44) and is connected via a charging cable (56) to a charging device (59) and features contact blades (58) as charging terminal contacts.

7. Appliance according to any of claims 1 to 6,
characterised in that the bow-type plug (44) and the charging plug (54) have a positive guide (46).

8. Appliance according to any of claims 1 to 7,
characterised in that the spring-mounted contacts (32, 42) are completely surrounded by the protective sleeves (30, 40) and co-operate with contact blades (50, 58) of the bow-type plug (44) and charging plug (54), respectively.

9. Appliance according to any of claims 1 to 8,
characterised in that it is in the form of a lawnmower.

10. Appliance according to any of claims 1 to 9,
characterised in that disposed between the motor terminals and the spring-mounted contacts (42) on the appliance side is an electrical switching system (60).

## Revendications

1. Outil muni d'un moteur électrique (14) comme système d'entraînement et d'un ensemble de batterie (20, 22, 24) comprenant une batterie rechargeable (20) dont les branchements (34) peuvent être raccordés aux branchements du moteur au moyen d'un dispositif de connexion enfichable, le dispositif de connexion enfichable présentant deux connecteurs multipolaires, disposés parallèlement entre eux et respectivement raccordés aux branchements de la batterie ou du moteur, et un connecteur en étrier (44) extractible pour ces connecteurs,
**caractérisé** en ce que le premier connecteur est fixé en position dans le châssis (12) de l'outil et l'autre connecteur sur l'ensemble de batterie (20, 22, 24), qui peut être retiré du châssis (12) et installé dans ce dernier à l'aide d'un guide (26).

2. Outil selon la revendication 1, **caractérisé** en ce que l'axe d'enfichage du connecteur en étrier (44) s'étend parallèlement au guide (26) pour l'ensemble de batterie (20, 22, 24).

3. Outil selon la revendication 2, **caractérisé** en ce que les connecteurs présentent des contacts élastiques (32, 42), qui sont portés par des manchons protecteurs (30, 40) qui sont fixés en position dans le couvercle (24) de l'ensemble de batterie ou, respectivement, dans un élément isolant (38) installé dans le châssis de l'outil.

4. Outil selon une des revendications 1 à 3, **caractérisé** en ce que le guide (26) présente une liaison mécanique (48) qui fixe la position relative des connecteurs à l'état installé de la batterie.

5. Outil selon une des revendications 1 à 4, **caractérisé** en ce que le connecteur en étrier (44) peut être enfiché parallèlement à la direction d'insertion de l'ensemble de batterie (20, 22, 24).

6. Outil selon une des revendications 1 à 5, **caractérisé** par un connecteur de charge (54) correspondant au connecteur en étrier (44), qui est relié à un chargeur (59) par l'intermédiaire d'un câble de charge (56) et présente des lames de contact (58) comme contacts de connexion de charge.

7. Outil selon une des revendications 1 à 6, **caractérisé** en ce que le connecteur en étrier (44) et le connecteur de charge (54) présentent un guide mécanique (46).

8. Outil selon une des revendications 1 à 7, **caractérisé** en ce que les contacts élastiques (32, 42) sont totalement enveloppés par les manchons protecteurs (30, 40) et coopèrent avec des lames de contact (50, 58) respectives du connecteur en étrier (44) ou du connecteur de charge (54).

9. Outil selon une des revendications 1 à 8, **caractérisé** en ce qu'il est réalisé sous forme de tondeuse à gazon.

10. Outil selon une des revendications 1 à 9, **caractérisé** en ce qu'une unité électrique de commutation (60) est disposée entre les branchements du moteur et les contacts élastiques (42) côté outil.
